# EUROPEAN PATENT SPECIFICATION

(11) **EP 4 554 139 B1**
(45) Date of publication and mention of the grant of the patent: **14.10.2026**
(21) Application number: 24211530.1
(22) Date of filing: 07.11.2024
(51) Int. Cl.: H04L 9/00, H04L 9/08

(54) **IMPROVED FULLY HOMOMORPHIC ENCRYPTION**
VERBESSERTE VOLLSTÄNDIG HOMOMORPHE VERSCHLÜSSELUNG
CHIFFREMENT ENTIÈREMENT HOMOMORPHIQUE AMÉLIORÉ

(30) Priority: 07.11.2023 WO PCT/EP2023/081012; 21.06.2024 IE S20240357
(43) Date of publication of application: 14.05.2025
(73) Proprietor: Vaultree, Ltd., Cork T12 RD43 (IE)
(72) Inventor: PRADHAN, Anil Kumar, Cork (IE); SOULE, Gabriel, Cork (IE); DOSYAK, Roman, Cork (IE); DA SILVA, Edimar, Cork (IE)
(74) Representative: Gillespie, Richard

(56) References cited:
- CN-A- 111 786 978
- JINSU KIM ET AL: "CRT-based Fully Homomorphic Encryption over the Integers", IACR, INTERNATIONAL ASSOCIATION FOR CRYPTOLOGIC RESEARCH, vol. 20130206:161034, 5 February 2013 (2013-02-05), pages 1 - 18, XP061007272
- ELDEFRAWY KARIM ET AL: "On the Hardness of Scheme-Switching Between SIMD FHE Schemes", 10 August 2023, POST-QUANTUM CRYPTOGRAPHY; [LECTURE NOTES IN COMPUTER SCIENCE; LECT.NOTES COMPUTER], SPRINGER NATURE SWITZERLAND, CHAM, PAGE(S) 196 - 224, ISBN: 978-3-031-40002-5, ISSN: 0302-9743, XP047666841

## Description

### Field

The present disclosure is directed towards improvements in the field of Fully Homomorphic Encryption.

### Background

Homomorphic encryption is a form of encryption that allows computations to be performed on encrypted data without first having to decrypt it. As such, computations can be performed on data that has been homomorphically encrypted without access to the secret key. The output from a computation performed on homomorphically encrypted data will be homomorphically encrypted data. This output can be left in an encrypted form. When the output of a computation performed on homomorphically encrypted data is decrypted, the output from the decryption will be identical to that produced by performing the computation on a plaintext (e.g. decrypted) version of the homomorphically encrypted data. Thus, homomorphic encryption can be used to provide the functionality to add two encrypted numbers or multiply two encrypted numbers (the word 'or' is intended to be an inclusive or - a or b means at least one from a, b, and ab; 'xor' is intended to be used as exclusive or - a xor b means either a or b). Further, any computation that is a combination of addition and multiplication can be performed on encrypted data.

For example, taking E( ) as an encryption function and x and y as two numbers, E(x), E(y) are the encrypted versions of x and y respectively. I.e. x→E(x), y→E(y). E( ) is homomorphic with respect to addition if we can evaluate E(x+y) (the encrypted sum of two numbers) from the encrypted numbers E(x), E(y) without decrypting them. I.e. E(x)+E(y)→E(x+y). Similarly, E( ) is homomorphic with respect to multiplication if we can evaluate encryption of E(x.y) (the encrypted product of two numbers) from encryption of individual numbers i.e., E(x),E(y) without decrypting them. I.e. E(x).E(y)→E(x.y)
Thus, homomorphic encryption can be used for privacy-preserving outsourced storage and computation. This allows data to be encrypted and out-sourced to commercial cloud environments for processing, all while encrypted.

Homomorphism and its applications are known from a number of papers including 'On data banks and privacy homomorphism' by R. Rivest et al, 'On privacy homomorphisms by E. Brickell et al, and the papers entitled 'Fully homomorphic encryption using ideal lattices' and 'Toward basing fully homomorphic encryption on worst-case hardness' by C. Gentry.

For sensitive data, such as health care information, homomorphic encryption can be used to remove privacy barriers that obstruct the efficient exchange of data or to increase the security of existing services. For example, predictive analytics in health care (e.g. the use of analytics based on a user's weight to predict an imminent heart-attack) can be hard to apply via a third party service provider due to medical data privacy concerns - but if the predictive analytics service provider can operate on encrypted data instead, these privacy concerns are diminished or obviated. Moreover, even if the service provider's system is compromised, the data remains secure.

Partially Homomorphic Encryption (PHE) encompasses schemes that support the evaluation of circuits consisting of only one type of gate/operation, e.g., addition xor multiplication.

Fully Homomorphic Encryption (FHE) encompasses schemes that support the evaluation of arbitrary circuits composed of multiple types of gates (e.g. addition or multiplication) of unbounded depth and is the strongest notion of homomorphic encryption. As used herein 'unbounded depth' means that a FHE is not limited by a bound specified at setup (i.e. the number of operations that can be performed is not limited).

Homomorphic encryption methods have been developed using different approaches. For example, the research paper entitled "Fully Homomorphic Encryption Using Ideal Lattices" by Craig Gentry describes a method of FHE. This method uses ideal lattices in a lattice-based cryptography system. This method supports both addition and multiplication operations on ciphertexts, from which it is possible to construct circuits for performing arbitrary computation. Further, this scheme is a "bootstrappable" FHE scheme. A bootstrappable FHE scheme is capable of evaluating its own decryption circuit and then at least one more operation (e.g. NAND). To put it differently, 'bootstrapping' refers to homomorphically decrypting a ciphertext using a homomorphic encryption of its own decryption key, with the goal of reducing the noise the ciphertext contains.

Previously, there was a problem evaluating a circuit with too many gates. In particular, the evaluation of each gate in the circuit adds noise and, at a certain point, this amount of noise renders the ciphertext impossible to decrypt. However, i) taking the decryption algorithm for a scheme and converting it into a circuit and ii) passing a ciphertext and an encrypted version of the private key through the circuit produced a 'clean' ciphertext of the same plaintext - i.e. noise is removed from the ciphertext. Furthermore, the circuit allowed you to run at least one NAND gate on two ciphertexts (a couple of gates that were equivalent to a NAND) and the decryption circuit without the result being rendered unretrievable by noise. As used in this disclosure, unless otherwise specified, the term 'circuit' refers to a boolean circuit (i.e., a circuit made of Boolean gates such as AND, NAND, OR, NOR, and NOT gates) that computes a function f.

FHE schemes are based on noisy encryptions. In such encryption schemes, the noise guarantees the security of fresh encryption. However, in such schemes evaluating homomorphic operations increases the noise magnitude and lowers the quality, i.e., computational budget, of ciphertexts. Bootstrapping is used to convert an exhausted ciphertext into an "equivalent" refreshed ciphertext. Exhausted ciphertexts contain high noise and cannot be operated on further, whereas refreshed ciphertexts can support further homomorphic operations.

However, bootstrapping is computationally expensive and slow as it requires a FHE system to perform arbitrary number of additions and multiplications. This makes the overall system very slow. Although this scheme allows to perform large number of computations, it is unfortunately too slow for use for most, if not all, practical application.

The use of CRT (Chinese Reminder Theorem) as part of homomorphic encryption algorithms is known. The use of CRT in homomorphic encryption was introduced in 'On data banks and privacy homomorphism' by R. Rivest et al. However, this algorithm is known to be vulnerable to chosen plaintext attack (CPA). One attempt to address this vulnerability is outlined in the paper entitled 'CRT-based fully homomorphic encryption over the integers' by Cheon et al. This paper introduced a homomorphic encryption scheme based on CRT (Chinese Reminder Theorem).

According to CRT, if one knows the remainders of the Euclidean division of an integer x by a number of integers, then it is possible to determine uniquely the remainder of the division of x by the product of these integers, so long as the divisors are pairwise and coprime (i.e. no two divisors share a common factor other than 1). CRT is widely used for computing with large integers, as it allows replacing a computation on large integers (where the size of the result falls within a known bound), by several similar computations on small integers.

Assuming *a mod p* denotes the unique integer in $\left(-\frac{{p}_{0}}{2},\frac{{p}_{0}}{2}\right]$ that is congruent to a modulo ρ and *CRT*_{(*p*₀,...,*p*ₖ)}(*m*₀, ... , *mₖ*) denotes the unique integer in $\left(-\frac{\prod {p}_{i}}{2},\frac{\prod {p}_{i}}{2}\right]$ that is congruent *mᵢ* modulo *pᵢ*, the CRT-FHE scheme disclosed by Cheon et al. is based on three functions:
i) Key generation - KeyGen(λ{Q}): Given a security parameter λ and relatively small pairwise coprime integers *Qᵢ*(*i =* 1, ... , *k*), choose large pairwise integers *pᵢ(i* = 0, ... , *k*) and let $n = {\prod }_{i = 0}^{k} {p}_{i}$. The KeyGen function outputs the secret key *sk =* (*p*₀, ... , *pₖ*) and the public parameter *pp* = (*n*, *Q*₁, ... , *Qₖ*). The message space is ${ℤ}_{Q}$ for $Q = {\prod }_{i = 1}^{k} {Q}_{i}$.
ii) Encryption - Enc(sk, m): The Enc function outputs $c = {CRT}_{\left({p}_{0},…,{p}_{k}\right)} \left(e,{m}_{1}+{e}_{1}{Q}_{1},…,{m}_{k}+{e}_{k}{Q}_{k}\right)$ where *mᵢ* = *m mod qᵢ* for all values of i, e is a random integer in $\left(-\frac{{p}_{0}}{2},\frac{{p}_{0}}{2}\right]$ and *e*₁, ... , *eₖ* are ρ-bit random integers.
iii) Decryption - Dec(sk,c): The Dec function outputs m *= CRT*_{(*Q*₁,...,*Q*ₖ})(*d*₁, ..., *dₖ*), where *dᵢ =* (*c mod pᵢ*) *mod Qᵢ* for all values of i.

The scheme can be regarded as a generalisation of the Dijk-Gentry-Halevi-Vaikutanathan (DGHV) homomorphic encryption scheme which can be extended to a fully homomorphic encryption (FHE) scheme using bootstrapping. The document entitled "CRT-based Fully Homomorphic Encryption over the Integers" by Kim Jinsu et al discloses a variation of the above scheme where small random 'errors' are added to plaintext.

However, as is clear from the above, the CRT-FHE proposed by Cheon et al still requires bootstrapping to perform arbitrary number of additions and multiplications on encrypted numbers, and as a result does not solve the computational and temporal problems caused by bootstrapping.

As used throughout this disclosure, the term random is intended to encompass random and pseudo random numbers. However, random numbers are preferred to pseudo random numbers.

### Object

The present disclosure is directed towards a FHE scheme that utilizes Chinese Reminder Theorem (CRT) and learning with errors (LWE). The aim of the present disclosure is to provide a system and method for FHE that does not requires a bootstrapping function. As such, a system and method in accordance with the present disclosure may be configured to perform an arbitrary number of additions or multiplications on encrypted data without the need for decryption or bootstrapping. This will overcome all the computational and storage limitation caused by the bootstrapping.

Further, a system and method in accordance with the present disclosure supports Single Instruction Multiple Data (SIMD) operations. This means that a large set of numbers can be encrypted together and the encrypted operations (e.g. addition, multiplication, or addition and multiplication) on the set of data can be performed with a single instruction.

### Summary

The objects of the present invention are achieved by means of the appended set of claims.

The present disclosure is directed towards a method of generating keys for fully homomorphic encryption, the method comprising: obtaining a first set of numbers S, wherein the first set of numbers is a set of pairwise coprime numbers *p*₁, ... , *p*_{*k*+1}; obtaining another parameter, wherein another parameter is a random or pseudo random number P; and calculating a secret key, sk, based on the first set of numbers, and the another parameter.

Preferably, k+1 = 2. Preferably, the secret key, sk = {S, P}.

Preferably, the method further comprises: obtaining a second set of prime numbers *r*₁, *r*₂*,* ... , *r*_{*k*+1}; obtaining a third set of numbers as the another parameter, wherein the third set of numbers is a set of random or pseudo random numbers *s*₁, *... , s*ₙ; calculating the secret key, sk, based on the first set of numbers, the second set of numbers, and third set of numbers; and calculating a public parameter, q, based on the first set of numbers and the second set of numbers.

Preferably, at least one of the first set of numbers, the second set of random prime number, and the third set of random numbers selected based on a security parameter.

Preferably, q is calculated by multiplying the first set of numbers together with the first and second extra prime numbers, whereby *q* = (*p*₁ × ... × *pₖ* × *p*_{*k*+1}) × (*r*₁ × *r*₂ × ... × *r*_{*k*+1}).

Preferably, *sk =* {*s =* (*s*₁, ... , *sₙ*), *p* = (*p*₁, ...*pₖ, p*_{*k*+1}), *r* = (*r*₁, *r*₂, ... , *r*_{*k*+1})}*.*

Preferably, the method comprises generating re-linearization keys, rlks, wherein generating the rlks comprises encrypting components of the secret key.

Preferably, the method comprises using a first set of random numbers ${α}_{1}^{ij} , … , {α}_{n}^{ij}$, *eᵢⱼ* to generate a first relinearization key *θ^{ij}* and using a set of random numbers ${α}_{1}^{j} , … , {α}_{n}^{j}$, *eⱼ* to generate a second relinearization key *δ^{j}*.

Preferably, the method comprises generating R-keys, wherein generating the R-Keys comprises encrypting components of the secret key.

Preferably, encrypting components of the secret key comprises performing an extended Chinese remainder function, XCRT, on the components of the secret key.

The present disclosure is also directed towards a method of fully homomorphic encryption which comprises obtaining a secret key, sk, and a plaintext *m*₁, ... , *mₖ* to be encrypted, wherein the secret key and the public parameter are generated in accordance with any preceding claim.

Preferably the method comprises generating and using a random number w.

Preferably, calculating the cypher text c comprises calculating *c = P.w + CRT*₍ₛ₎ (*m*₁,...,*mₖ*,*e*), where e is a random integer in the range {0,1, ... ,*p*_{*k*+1} - 1}.

Preferably, the method comprises deleting w after it has been used.

Preferably, the method comprises selecting a value e representing a random noise or a noise signal.

Preferably, the method comprises performing an extended Chinese remainder function, XCRT, on a vector, wherein the vector is based on the plaintext and the value *e*.

Preferably, the vector is $\left({m}_{1}{r}_{1}^{{l}_{1}},…,{m}_{k}{r}_{k}^{{l}_{k}},{er}_{k + 1}\right)$, wherein *l*₁ = ··· = *lₖ =* 1 are exponents.

Preferably, the method comprises selecting a plurality of random numbers *a*₁, ... , *aₙ* and subtracting the dot product of vector (*a*₁, ... , *a*ₙ) and (*s*₁, ... , *sₙ*) from the XCRT.

Preferably, the method comprises performing a modulus operation based on *q* on the XCRT function after the dot product of vector (*a*₁, ... , *a*ₙ) and (*s*₁, ... , *sₙ*) has been subtracted whereby a cipher value *c*₀ is obtained such that ${c}_{0} = \left[-\left({\sum }_{i = 1}^{n} {a}_{i} {s}_{i}\right)+{xcrt}_{\left({p}_{1},…{p}_{k},{p}_{k + 1}\right) , q}\left({m}_{1}{r}_{1}^{{l}_{1}},…,{m}_{k}{r}_{k}^{{l}_{k}},{er}_{k + 1}\right)\right] mod q$ .

Preferably, the method comprises a generating a ciphertext c by forming a vector, wherein forming the vector comprises appending the values *a*₁ , ..., *aₙ* and *l*₁, ... , *lₖ* to *c*₀*.*

The present disclosure is also directed towards decrypting a ciphertext generated as set out above, using a secret key sk generated as set out above, wherein the secret key comprises s and s equals (*s*₁, ... , *sₙ*), and the ciphertext comprises a vector *a* = (*a*₁, ... , *aₙ*), and the method comprises: determining the sum of i) the first coordinate of the ciphertext; and ii) the dot product of *s* = (*s*₁, ... , *sₙ*) and the vector *a* = (*a*₁, ... , *aₙ*) of ciphertext.

Preferably, the method comprises, for *j* = 1,..,*k*, multiplying ${\left({r}_{j}^{{l}_{j}}\right)}^{- 1} mod {p}_{j}$ to the sum and then performing a modulus operation based on *pⱼ* on the result, whereby ${m}_{j} = \left[\left({c}_{0}+{\sum }_{i = 1}^{n} {c}_{i} {s}_{i} mod q\right)∗{\left({r}_{j}^{{l}_{j}}\right)}^{- 1}mod {p}_{j}\right]$,*j* = 1, ... , *k.*

The present disclosure is also directed towards a method of performing encrypted homomorphic multiplication, wherein the method is configured to perform a function *f_{multiply}*() on two ciphertexts *c* and *c'* together to produce a new ciphertext, *c_{multiply}* = *f_{multiply}*(*c, c'*), wherein the ciphertext *c* and *c'* are produced using a method of encryption as set out above.

Preferably, *c_{multiply}* is computed as ${c}_{multiply} = \left[\left({c}_{0}^{∗},{c}_{1}^{∗},…,{c}_{n}^{∗}\right), \left({l}_{1}^{∗},…,{l}_{k}^{∗}\right)\right]$, wherein: ${c}_{t}^{∗} = f \left(c,c′,\left\{{θ}^{ij}\right\},\left\{{δ}^{j}\right\}\right)$ ; t is any integer from 0 to n; *f*( ) is a predetermined function; and {*θ^{ij}*}, {*δ^{j}*} are relinearization keys.

Preferably, when t = 0, *f*(*c, c'*, {*θ^{ij}*}, {*δ^{j}*}) equals $\left({c}_{0}{c}_{0}^{′}+{\sum }_{i , j = 1 , i \neq j}^{n} {c}_{0}^{ij} \left({c}_{i}{c}_{j}^{′}+{c}_{j}{c}_{i}^{′}\right) + {\sum }_{j = 1}^{n} {c}_{j} {c}_{j}^{′} {c}_{0}^{j}\right)$ ; when t > 0, *f*(*c, c'*, {*θ^{ij}*}*,* {*δ^{j}*}) equals $\left({c}_{t}^{j}+{\sum }_{i , j = 1 , i \neq j}^{n} \left({c}_{i}{c}_{j}^{′}+{c}_{j}{c}_{i}^{′}\right) {c}_{t}^{ij}\right)$, *t* = 1, ... , *n*; and ${l}_{t}^{∗} = {l}_{t} + {l}_{t}^{′}$, *t =* 1, *... , k.*

Preferably, the present disclosure is also directed towards a method of performing encrypted homomorphic addition, wherein the method is configured to perform a function *f_{add}*() on two ciphertexts *c* and *c'* together to produce a new ciphertext, *c_{add}* wherein: *c_{add}* = *f_{add}*(*c, c*'); *c_{add}* is the encryption of the sum of plaintext values corresponding to the ciphertexts *c* and *c'*; and the ciphertext *c* and *c'* were produced using a method of encryption as set out above.

Preferably the method comprises determining a first set of level values ${l}_{1}^{∗} , … , {l}_{k}^{∗}$ for *c_{add}*, wherein ${l}_{i}^{∗}$ is $max \left\{{l}_{i}, {l}_{i}^{′}\right\}$.

Preferably, the method comprises calculating a set of first intermediary values *c*⁽¹⁾ and a second set of intermediary values c⁽²⁾ based on the first set of level values and ciphertexts c and c'.

Preferably, ${c}^{\left(1\right)} = \left({\sum }_{i = 1}^{k} {R}_{i}^{{l}_{i}^{∗} - {l}_{i}}\right) ∗ c , {c}^{\left(2\right)} = \left({\sum }_{i = 1}^{k} {R}_{i}^{{l}_{i}^{∗} - {l}_{i}^{′}}\right) ∗ c ′ ,$ where, Σ represents coordinate-wise sum and * represents a homomorphic multiplication as set out above, and ${R}_{i}^{l}$ represents homomorphic multiplication of Rᵢ with itself l number of times.

Preferably, ${c}_{add} = \left[\left(\left({c}_{0}^{\left(1\right)}+{c}_{0}^{\left(2\right)}\right)mod q, …,\left({c}_{k}^{\left(1\right)}+{c}_{k}^{\left(2\right)}\right)mod q\right), \left({l}_{1}^{∗},…,{l}_{k}^{∗}\right)\right] .$

The present disclosure is also directed towards a method of performing encrypted homomorphic Plaintext to Ciphertext multiplication wherein the method is configured to perform a function *f*_{*multiply*2}() on a ciphertext c and a plaintext number *x* to produce a ciphertext *c*_{*multiply*2}, the ciphertext in an encryption, enc(), of a plaintext vector (*m*₁, ... , *mₖ*) and *c*_{*multiply*2} = *enc*(*x* _{*} *m*₁, ... , *x* * *mₖ*).

Preferably ${c}_{multiply 2} = \left[\left({c}_{0}^{∗},{c}_{1}^{∗},…,{c}_{n}^{∗}\right), \left({l}_{1}^{∗},…,{l}_{k}^{∗}\right)\right]$, wherein: t is an integer value greater than or equal to 0 and less than or equal to n (i.e. 0 ≤ *t* ≤ *n*)); ${c}_{t}^{∗} = x ∗ {c}_{t} mod q$, *t =* 0,1, ..., *n*; and ${l}_{t}^{∗} = {l}_{t}$, *t =* 0,1, ..., *n*.

The present disclosure is also directed towards a method of generating Public Key, pk, from a secret key, wherein the secret key was generated as set out above.

Preferably, the method comprises: generating a zero vector that is *e*₀ = (0,0, ...,0); and generating k non-zero vectors, wherein a non-zero vector contains the value 1 in its n^{th} coordinate and 0 in the remaining coordinates, wherein n is an integer and 1 ≤ n ≤k whereby *e*₁ = (1,0, ...,0), *e*₂ = (0,1,0, ...,0), ..., *eₖ* = (0,0, ...,0,1).

Preferably, generating the public key comprises encrypting *e*₀, *e*₁, ..., *eₖ*, whereby: *pk =* (*E*₀ *= enc*(*e*₀), *E*₁ *= enc*(*e*₁)*,* ... , *Eₖ = enc*(*eₖ*))

The present disclosure is also directed towards a method of performing Public Key encryption, wherein the method is configured to encrypt a plaintext vector (*m*₁, ... , *mₖ*) with a public key generated as set out above.

Preferably, the method comprises performing a plaintext-ciphertext multiplication as described above.

Preferably, a plaintext-ciphertext multiplication is performed on a random number *r* and ciphertext *E*₀; and a plaintext-ciphertext multiplication is performed on each coordinate *mᵢ* and ciphertext *Eᵢ* for *i* = 1, ... , *k*; and the results of the plaintext-ciphertext multiplications are homomorphically added together, whereby $c = r ∗ {E}_{0} + {\sum }_{i = 1}^{k} {m}_{i} ∗ {E}_{i}$, wherein: *r* * *E*₀ and *mᵢ* * *Eᵢ* are plaintext-ciphertext multiplications, *r* and *mᵢ* are plaintexts, *E*₀ and *Eᵢ* are ciphertexts, and ∑ represents the homomorphic addition of ciphertexts.

Preferably, the XCRT function is calculated according to the equation *xcrt*_{(*n*₁*,n*₂*,...,n*ₖ})*_{,n'}*: ${ℤ}_{{n}_{1}} \times … \times {ℤ}_{{n}_{k}} \to {ℤ}_{n}$, where *n*₁, *n*₂, ... , *nₖ* are a a plurality of pairwise coprime numbers, and n' which is any suitable number.

The present disclosure is also directed towards a computer program comprising instructions which, when executed by a computing system, cause the computing system to carry out a method as set out above.

The present disclosure is also directed towards a computer-readable storge medium or a data carrier signal carrying the above computer program.

The present disclosure is also directed towards a computing system comprising at least computer, the computer system comprising means for performing a method as set out above.

### Detailed Description

The CRT function, may be defined as follows: ${crt}_{{n}_{1} , {n}_{2} , … , {n}_{k}} : {ℤ}_{{n}_{1}} \times … \times {ℤ}_{{n}_{k}} \to {ℤ}_{n}$ $\left({x}_{1},…,{x}_{k}\right) ↦ x , {x}_{i} = x mod {n}_{i} ∈ {ℤ}_{{n}_{i}} ∀ i ,$ where *n*₁, *n*₂, ..., *nₖ* are a plurality of pairwise coprime numbers and n is the product of the plurality of pairwise coprime numbers (i.e. *n* = *n*₁*n*₂ ... *nₖ*).

If $x ∈ {ℤ}_{n}$ we can compute the tuple (*x*₁, ..*.* , *xₖ*) by computing each *xⱼ = x mod nⱼ* for *j =* 1, *...* , *k.*
For $\left({x}_{1},…,{x}_{k}\right) ∈ {ℤ}_{{n}_{1}} \times … \times {ℤ}_{{n}_{k}}$ we can compute *x* as follows:
First, during a precompute stage, a value s is calculated for *j =* 1, ... , *k* as ${s}_{j} = \frac{n}{{n}_{j}}$. A value t is also calculated during the precompute stage for *j* = 1, *... , k* as ${t}_{j} = {\left[{s}_{j}^{- 1}\right]}_{{n}_{j}}$ which can be rewritten as ${t}_{j} = {s}_{j}^{- 1} mod {n}_{j}$

The CRT of (*x*₁, ... , *xₖ*) can then be calculated as *x* = crt(*x*₁, ... , *xₖ*) = Σ *xⱼsⱼtⱼ mod n*.

The CRT function can be extended to produce a new extended CRT function (XCRT) that performs the same computation as a CRT function does but with a different modulus. Similarly to a CRT function, the XCRT function is calculated based on a plurality of pairwise coprime numbers (*n*₁, *n*₂, ... , *nₖ*), However, the XCRT uses a number n' which is any suitable number. Thus, the XCRT function may be calculated according to the following equation: ${xcrt}_{\left({n}_{1},{n}_{2},…,{n}_{k}\right) , n ′} : {ℤ}_{{n}_{1}} \times … \times {ℤ}_{{n}_{k}} \to {ℤ}_{n ′}$ $\left({x}_{1},…,{x}_{k}\right) ↦ x = {\sum }_{j = 1}^{k} {x}_{j} {s}_{j} {t}_{j} mod n ′$ When *n'* = *n* = *n*₁*n*₂ ... *nₖ* the *xcrt* function becomes the same as *crt* function. When the value of n' for a XCRT function is a multiple of the value of n for the equivalent CRT function, the *xcrt* function retains the homomorphic properties of the equivalent CRT function.

### Key Generation

A system in accordance with the present disclosure comprises key generation functions.

In a first embodiment, key generation produces a key that can be used for encryption. Preferably the key may also be used for decryption. In order to generate the key, a random number P of bit length η is selected. Two coprime numbers 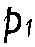 and 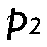 are also selected. The number 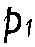 may represent the plain-text space. It may be selected so that it has a predetermined bit-size based on the bit-size required to represent the plain-text data. E.g. 64 bits. The number 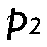 may represent the noise space. Preferably, 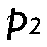 is selected so that it has ρ bits. The secret key can be set as sk = (*P*, 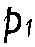 , 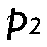 ).

The secret key sk can be calculated based on a security parameter λ. In particular, for a given value of λ, ρ represents a bound on the bit-length of the error, η the bit length of the secret greatest divisor, and γ the bit length of an AGCD sample that is also equivalent to the cyphertext size. Thus for a given security parameter λ, the other parameters may be set as follows:
- Noise/Error: ρ ← λ
- Size of the secret key: η ← λ + *L* log λ, for a constant *L*
- Size of the cypher-text: γ ← *L^{k}*λ log λ, for a multiplication depth of k.

To encrypt a plain text message m ∈ Z_{p*1*} using the secret key sk, a random noise e is selected. Preferably e is of bit-length ρ. A random number w is also selected. Based on these values a ciphertext may be calculated as follows: ${Δ}_{1} = {p}_{2} \left({p}_{2}^{- 1} mod {p}_{1}\right) , {Δ}_{2} = {p}_{1} \left({p}_{1}^{- 1} mod {p}_{2}\right)$ $c = Pw + {Δ}_{1} m + {Δ}_{2} e$

The plaintext message m may be calculated from the cyphertext c as follows: $m = \left(c mod P\right) mod {p}_{1}$

Such a scheme supports fully homomorphic operations. In particular, addition and multiplication are supported. For example, if we have two ciphertexts c₁ and c₂ where c₁ is an encryption of m₁ and c₂ is an encryption of m₂, then ${c}_{1} + {c}_{2} = {c}_{add} = enc \left({m}_{1}+{m}_{2}\right) ;$ and ${c}_{1} x {c}_{2} = {c}_{mult} = enc \left({m}_{1} x {m}_{2}\right) .$

This is based on the fact that, for any cyphertext of a message encrypted with a secret key, decrypting the cyphertext with the secret key will recover the message m. I.e. $Dec \left(Enc\left(m, sk\right),sk\right) = m$

In particular, if we encrypt m with the secret key sk = (*P,* 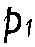 *,* 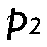 )*,* encryption comprises calculating a first intermediate value Δ₁, where: ${Δ}_{1} = {p}_{2} \left({p}_{2}^{- 1} mod {p}_{1}\right)$

Further, a second intermediate value Δ₂ is calculated, where: ${Δ}_{2} = {p}_{1} \left({p}_{1}^{- 1} mod {p}_{2}\right)$

A cyphertext c can now be calculated: $c = Pw + {Δ}_{1} m + {Δ}_{2} e$

The calculation of the cyphertext can be rewritten using Chinese Remainder Theorem as: $c = Pw + {CRT}_{{p}_{1} , {p}_{2}} \left(m, e\right)$

If we decrypt c using the decryption function described above: $\left(c mod P\right) mod {p}_{1} = {Δ}_{1} m + {Δ}_{2} e mod {p}_{1}$

However, ${Δ}_{1} m + {Δ}_{2} e mod {p}_{1} = m$

Thus: $Dec \left(Enc\left(m, sk\right),sk\right) = m$

As a result, decryption and encryption in accordance with the present disclosure are correct and consistent. The decryption of an encrypted message results in the original plaintext message without loss or alteration.

To prove the correctness of the homomorphic properties, consider the encryption, performance of a function, and decryption of two messages m and m'. First, the cyphertexts for m and m' are calculated: $c = Enc \left(m, sk\right) = Pw + {Δ}_{1} m + {Δ}_{2} e$ $c ′ = Enc \left(m′,sk\right) = c = Pw ′ + {Δ}_{1} m ′ + {Δ}_{2} e ′$

To perform homomorphic addition, c and c' are added together: ${c}_{add} = \left(c+c′\right) = c = P \left(w+w′\right) + {Δ}_{1} \left(m+m′\right) + {Δ}_{2} \left(e+e′\right)$

The resulting cyphertext is decrypted: $Dec \left({c}_{add}, sk\right) = m + m ′$

Similarly for homomorphic multiplication: ${c}_{mult} = \left(c\times c′\right)$

The resulting cyphertext is decrypted: $Dec \left(sk, {c}_{mult}\right) = Dec \left(sk,\left(c\times c′\right) mod N\right)$

And due to the properties of a scheme according to the present disclosure: $\begin{matrix}{c}_{mult} = \left(c\times c′\right) = \left(Pw+{Δ}_{1}m+{Δ}_{2}e\right) \left(Pw+{Δ}_{1}m+{Δ}_{2}e\right) \\ = Pw " + {Δ}_{1} {m}_{1} {m}_{2} + Δe "\end{matrix}$

As such, $Dec \left(sk, \left(c\times c′\right)\right) = m \times m ′$

As a result, a system in accordance with the present disclosure correctly performs homomorphic addition and multiplication.

The security of a scheme in accordance with the present disclosure can be demonstrated by performing a reduction to the approximate greatest common divisor (AGCD). In particular if there is a method X for breaking encryption according to the present disclosure and allowing the recovery of the secret keys from the AGCD sample.

### 1. AGCD Sample:

${x}_{i} = {Pq}_{i} + {r}_{i}$

Here, *P* is the secret, *qᵢ* are random integers, and *rᵢ* are small errors.

### 2. Ciphertext of the Proposed Scheme:

$c = Enc \left(m, sk\right) = Pw + {Δ}_{1} m + {Δ}_{2} e$

The proposed scheme refers to a system in accordance with the present disclosure. From the above, assuming method X can recover the secret key P, which is identical to the secret key of the AGCD scheme. Thus, if there exists a method X capable of breaking encryption according to the present disclosure, the same method is used to break the AGCD scheme, validating the security of a system according to the present disclosure.

To ensure the system's security, the parameters are preferably selected to resist several types of attack.

For example, a lattice reduction attack, such as orthogonal lattice attacks, are optimized methods aimed at solving approximate common divisor problems. To ensure security against all known attacks, the parameters are selected such that: $γ \geq Ω \left(\frac{λ}{log λ}{\left(η-ρ\right)}^{2}\right)$

To protect against brute force attacks on noise: $ρ \geq λ$

Thus preferably, the parameters are selected as follows:
- Noise/Error: ρ ← λ
- Size of the secret key: η ← λ + *L* log λ, where L is a constant
- Size of the AGCD sample: γ ← *L*²λ log λ, incorporating a multiplication depth k.

Using the above parameters, $\frac{λ}{log λ} {\left(η-ρ\right)}^{2} = \frac{λ}{log λ} {\left(λ+L log λ-λ\right)}^{2} = \frac{λ}{log λ} {\left(L log λ\right)}^{2} = {L}^{2} λ log λ$

Thus γ = *L*²λ log λ satisfies the security condition: $γ \geq Ω \left(\frac{λ}{log λ}{\left(η-ρ\right)}^{2}\right)$ In a second embodiment, the key generation functions generate a number of different keys. In particular, the system preferably generates a secret key, a public parameter, re-linearization keys, and R-keys.

To generate the secret key, a first set of numbers is generated. The first set of numbers is generated by selecting a plurality of large pairwise coprime numbers *p*₁, ...*pₖ, p*_{*k*+1}. Preferably, the first set prime numbers comprises *k +* 1 large pairwise coprime numbers, where *k* is the maximum size of a plaintext vector that can be encrypted by the system.

Preferably, the plurality of large pairwise coprime numbers selected for the first set of random numbers are selected by the system, based on a security parameter. The security parameter is selected by a user and sets the level of security of the system. In particular, the security parameter is indicative of the bit-size of the large coprime numbers. The system is preferably configured such that a user can use the security parameter to select a known standard such as 128 bit, 256-bit, 512-bit security.

In addition, a second set of numbers is also generated. The second set of numbers is generated by selecting a plurality of large prime numbers *r*₁,*r*₂*,* ... , *r*ₖ₊₁. Preferably, the second set of numbers comprises *k +* 1 large prime numbers, where *k* is the maximum size of a plaintext vector that can be encrypted by the system. The large prime numbers selected for the second set of numbers are also preferably selected by the system based on the security parameter.

A plurality of random numbers *s*₁, ... , *sₙ* are also selected by the system. The number n is an integer which sets the size of the ciphertext. The system is configured to calculate a secret key (sk) based on the selected values. In particular, the sk may be calculated as follows: $sk = \left\{s=\left({s}_{1},…,{s}_{n}\right),p=\left({p}_{1},…{p}_{k},{p}_{k + 1}\right),r=\left({r}_{1},{r}_{2},…,{r}_{k + 1}\right)\right\}$

A public parameter q is also calculated using the first and second sets of prime numbers. In particular, *q* = (*p*₁ × ... × *pₖ* × *p*_{*k*+1}) × (*r*₁ × *r*₂ × ... × *r*_{*k*+1})

Re-linearization keys (rlks) are also calculated. The rlks are used during multiplication of two encrypted data. The rlks are generated by encrypting the components of the secret key. In particular, for *i, j* = 1, ..., *k* the rlks keys for *sᵢsⱼ, i* ≠ *j* and ${s}_{j}^{2}$ are calculated as follows:
A first relinearization key *θ^{ij},* corresponding to *sᵢsⱼ,* may be generated using a first set of random numbers ${α}_{1}^{ij} , … , {α}_{n}^{ij} , {e}_{ij}$. The first relinearization key *θ^{ij}* may be determined using the following equation: ${s}_{i} {s}_{j} \to {θ}^{ij} = \left(-\left({\sum }_{t = 1}^{n} {α}_{t}^{ij} {s}_{t}\right)+{s}_{i}{s}_{j}+{xcrt}_{\left({p}_{1},…{p}_{k},{p}_{k + 1}\right) , q}\left(0,…,0,{r}_{k + 1} {e}_{ij}\right) mod q,{α}_{1}^{ij},…,{α}_{n}^{ij}\right)$
A second relinearization key *δ^{j}*, corresponding to *sⱼ,* may be generated using a second a set of random numbers ${α}_{1}^{j} , … , {α}_{n}^{j}$, *eⱼ.* The relinearization key *δ^{j}* may be determined using the following equation: ${s}_{j}^{2} \to {δ}^{j} = \left(-\left({\sum }_{t = 1}^{n} {α}_{t}^{j} {s}_{t}\right)+{s}_{j}^{2}+{xcrt}_{\left({p}_{1},…{p}_{k},{p}_{k + 1}\right) , q}\left(0,…,0,{r}_{k + 1}{e}_{j}\right) mod q,{α}_{1}^{j},…,{α}_{n}^{j}\right)$

The resultant first and second relinearization keys {*θ^{ij}*}_{*i,j*=1,...*n'*} {*δ^{j}*}_{*j*=1,...*n*}) are the relinearization keys (rlks) corresponding to the secret key *sk* described above.

In addition, R-keys are also calculated. The R-Keys are also calculated based on encrypting components of the secret key. In addition, the R-Keys may be generated using a third set of random numbers ${γ}_{1}^{i} , … , {γ}_{n}^{i}$. For example, k R-keys can be calculated according to the following equation: ${R}_{i} = \left(-\left({\sum }_{t = 1}^{n} {γ}_{t}^{i} {s}_{t}\right)+{xcrt}_{\left({p}_{1},…{p}_{k},{p}_{k + 1}\right) , q}\left(0,…,{r}_{i},…,0,{r}_{k + 1}{e}_{i}\right) mod q,{γ}_{1}^{i},…,{γ}_{n}^{i}\right) ,$ where 1 ≤ i ≤ k.
The resultant (*R*₁, ... , *Rₖ*) R-Keys are the R-keys corresponding to the above secret key *sk* above.

As a result, suitable keys for performing homomorphic operations: $\left\{\left({\left\{{θ}^{ij}\right\}}_{i , j = 1 , … n}, {\left\{{δ}^{j}\right\}}_{j = 1 , … n}\right), \left({R}_{1},…,{R}_{k}\right)\right\}$ are provided.

### Symmetric Key Encryption

The system also preferably comprises an encryption function. The encryption function operates on plaintexts (*m*₁, ... , *mₖ*) with the secret key *sk.* To encrypt, a plurality of random numbers a₁, ... , *aₙ* are selected. Preferably, the numbers are uniformly random - i.e. *a*₁, ... , *aₙ* ∈ *F_{q}.* In addition, a value e representing a random noise or a noise signal is selected. Based on these values, the secret key, and the public parameter *q*, a value *c*₀ is obtained. In particular, the XCRT function of the vector $\left({m}_{1}{r}_{1}^{{l}_{1}},…,{m}_{k}{r}_{k}^{{l}_{k}},{er}_{k + 1}\right)$ is computed. In this disclosure, *l*₁ = ··· = *lₖ =* 1 are exponents referred to as levels. The dot product of vector (*a*₁, ... , *a*ₙ) and *s* = (*s*₁, ... , *sₙ*) is then subtracted. Further, modulus q of the result is computed i.e. ${c}_{0} = \left[-\left({\sum }_{i = 1}^{n} {a}_{i} {s}_{i}\right)+{xcrt}_{\left({p}_{1},…{p}_{k},{p}_{k + 1}\right) , q}\left({m}_{1}{r}_{1}^{{l}_{1}},…,{m}_{k}{r}_{k}^{{l}_{k}},{er}_{k + 1}\right)\right] mod q .$ The final ciphertext c is obtained by forming a vector by appending the values *a*₁ , ... , *aₙ* and *l*₁, ... , *lₖ* to *c*₀ i.e. $c = \left[\left({c}_{0},{a}_{1},…,{a}_{n}\right), \left({l}_{1},…,{l}_{k}\right)\right]$

In contrast to the CRT-based encryption algorithm proposed by Cheon et al, a system in accordance with the present disclosure uses $\left({\sum }_{i = 1}^{n} {a}_{i} {s}_{i}\right)$.

In addition, in a system in accordance with the present disclosure, and in contrast with the crt-based encryption function proposed by Cheon et al, the XCRT function is preferably used. In particular, the XCRT of the vector $\left({m}_{1}{r}_{1}^{{l}_{1}},…,{m}_{k}{r}_{k}^{{l}_{k}},{er}_{k + 1}\right)$ is computed. As noted above, *r*₁, ... , *r*_{*k*+1} are also preferably components of the secret key.

In addition, in the *crt* function proposed by Cheon et al, e is placed before the plaintext *m*₁. In contrast, in the vector of the present disclosure, e is placed after the plaintext *mₖ*.

Further, the public parameter and random numbers proposed by Cheon et al are preferably not used in the encryption function of the present system - i.e. the CRT function utilised in a system in accordance with the present disclosure operates on *m*₁*,* ... , *mₖ* and not on *m*₁ + *e₁Q*₁, ... , *mₖ + eₖQₖ.*

### Decryption

According to the present disclosure, a ciphertext c can also be decomposed into n+1 partial ciphertexts (*c*₀, *c*₁, ... , *cₙ*) - i.e. $c = \left[\left({c}_{0},{c}_{1},…,{c}_{n}\right), \left({l}_{1},…,{l}_{k}\right)\right]$

As such, the decryption function can be performed according to the following equation: ${m}_{j} = \left[\left({c}_{0}+{\sum }_{i = 1}^{n} {c}_{i} {s}_{i} mod q\right)∗{\left({r}_{j}^{{l}_{j}}\right)}^{- 1} mod {p}_{j}\right] , j = 1 , … , k$

### Operating on encrypted data

If c is an encryption of plaintexts (*m*₁, ... , *mₖ*) which equals (*c*₀, *..., cₙ*) and c' is an encryption of plaintexts $\left({m}_{1}^{′},…,{m}_{k}^{′}\right)$, which equals (*c*'₀, *... , c'ₙ*), then in order to perform a homomorphic addition, we need a function to compute the ciphertext *c_{add}* from *c* and *c'* such that, when decrypted, *c_{add}* equals $\left({m}_{1},…,{m}_{k}\right) + \left({m}_{1}^{′},…,{m}_{k}^{′}\right) = \left({m}_{1}+{m}_{1}^{′},…,{m}_{k}+{m}_{k}^{′}\right)$. In order to perform homomorphic multiplication, we also need a function to calculate the ciphertext *c_{multiply}* from *c* and *c'* such that, when decrypted, *c_{multiply}* equals $\left({m}_{1}∗{m}_{1}^{′},…,{m}_{k}∗{m}_{k}^{′}\right)$.

### Homomorphic multiplication

The system preferably comprises a homomorphic multiplication function to obtain a ciphertext that is encryption of the product of two plaintexts (*m*₁, ... , *mₖ)* and $\left({m}_{1}^{′},…,{m}_{k}^{′}\right)$. I.e. ${c}_{multiply} = enc \left({m}_{1}∗{m}_{1}^{′},…,{m}_{k}∗{m}_{k}^{′}\right)$. It has surprisingly been found that *c_{multiply}* can be calculated as ${c}_{multiply} = \left({c}_{0}^{∗},{c}_{1}^{∗},…,{c}_{n}^{∗}\right)$, where ${c}_{t}^{∗} = \left({c}_{t}{c}_{t}^{′}+{\sum }_{i , j = 1 , i \neq j}^{n} {α}_{x}^{ij} \left({c}_{i}{c}_{j}^{′}+{c}_{j}{c}_{i}^{′}\right)+{\sum }_{j = 1}^{n} {c}_{j} {c}_{j}^{′} {β}_{0}^{j}\right) = {f}_{1} \left(c,c′,\left\{{θ}^{ij}\right\},\left\{{δ}^{j}\right\}\right)$ ${c}_{t}^{∗} = {δ}_{t}^{j} + {\sum }_{i , j = 1 , i \neq j}^{n} \left({c}_{i}{c}_{j}^{′}+{c}_{j}{c}_{i}^{′}\right) {θ}_{t}^{ij} = {f}_{2} \left(c,c′,\left\{{θ}^{ij}\right\},\left\{{δ}^{j}\right\}\right)$,
and t refers to the index value of ${c}_{t}^{∗}$ (for any integer value of t greater than or equal to 0 and less than or equal to n (i.e. 0 ≤ *t* ≤ *n*))*.*

Remarkably, due to the properties of the XCRT function, the increase or decrease of noise e in ${xcrt}_{\left({p}_{1},…{p}_{k},{p}_{k + 1}\right) , q} \left({m}_{1}{r}_{1}^{{l}_{1}},…,{m}_{k}{r}_{k}^{{l}_{k}},{er}_{k + 1}\right)$ does not affect the values of plaintext *m*₁, ... , *mₖ*.

This can be proved as follows:
If we have a first plaintext *m*₁, ... , *mₖ ,* it can be written in encrypted form as: ${xcrt}_{\left({p}_{1},…{p}_{k},{p}_{k + 1}\right) , q} \left({m}_{1}{r}_{1}^{{l}_{1}},…,{m}_{k}{r}_{k}^{{l}_{k}},{er}_{k + 1}\right) = \left({c}_{0}+{\sum }_{i = 1}^{n} {c}_{i} {s}_{i}\right)$
**If** we have a second plaintext *m'*₁, ... , *m,ₖ,* it can be written in encrypted form as: ${xcrt}_{\left({p}_{1},…{p}_{k},{p}_{k + 1}\right) , q} \left({m}_{1}^{′}{r}_{1}^{{l}_{1}^{′}},…,{m}_{k}^{′}{r}_{k}^{{l}_{k}^{′}},e′{r}_{k + 1}\right) = \left({c}_{0}^{′}+{\sum }_{i = 1}^{n} {c}_{i}^{′} {s}_{i}\right)$

If, taking the lefthand side of the equations above, we multiply the first encrypted plaintext by the second encrypted plaintext, we get: $\begin{matrix}{xcrt}_{\left({p}_{1},…{p}_{k},{p}_{k + 1}\right) , q} \left({m}_{1}{r}_{1}^{{l}_{1}},…,{m}_{k}{r}_{k}^{{l}_{k}},{er}_{k + 1}\right) ∗ {xcrt}_{\left({p}_{1},…{p}_{k},{p}_{k + 1}\right) , q} \left({m}_{1}^{′}{r}_{1}^{{l}_{1}^{′}},…,{m}_{k}^{′}{r}_{k}^{{l}_{k}^{′}},e′{r}_{k + 1}\right) \\ = {xcrt}_{\left({p}_{1},…{p}_{k},{p}_{k + 1}\right) , q} \left(\left({m}_{1}{m}_{1}^{′}\right){r}_{1}^{{l}_{1} + {l}_{1}^{′}},…,\left({m}_{k}{m}_{k}^{′}\right){r}_{k}^{{l}_{k} + {l}_{k}^{′}},ee′{r}_{k + 1}^{2}\right)\end{matrix}$

If, taking the righthand side of the equations above, we multiply the first encrypted plaintext by the second encrypted plaintext, we get: $\left({c}_{0}+{\sum }_{i = 1}^{n} {c}_{i} {s}_{i}\right) ∗ \left({c}_{0}^{′}+{\sum }_{i = 1}^{n} {c}_{i}^{′} {s}_{i}\right) = {c}_{0} {c}_{0}^{′} + {\sum }_{i , j = 1 , i \neq j}^{n} \left({c}_{i}{c}_{j}^{′}+{c}_{j}{c}_{i}^{′}\right) {s}_{i} {s}_{j} + {\sum }_{j = 1}^{n} {c}_{j} {c}_{j}^{′} {s}_{j}^{2}$

If we use the re-linearization keys to replace *sᵢsⱼ* and ${s}_{j}^{2}$ from the equation, we get: ${θ}^{ij} = \left(-\left({\sum }_{t = 1}^{n} {α}_{t}^{ij} {s}_{t}\right)+{s}_{i}{s}_{j}+{crt}_{\left({p}_{1},…{p}_{k},{p}_{E}\right)}\left(0,…,0,{re}_{ij}\right) mod q,{α}_{1}^{ij},…,{α}_{n}^{ij}\right) = \left({c}_{0}^{ij},{c}_{1}^{ij},…,{c}_{n}^{ij}\right)$ From this equation we can infer that ${s}_{i} {s}_{j} = \left({c}_{0}^{ij}+{\sum }_{t = 1}^{n} {c}_{t}^{ij} {s}_{t}\right) - {crt}_{\left({p}_{1},…{p}_{k},{p}_{E}\right)} \left(0,…,0,{re}_{ij}\right)$ ${δ}^{j} = \left(-\left({\sum }_{t = 1}^{n} {α}_{t}^{j} {s}_{t}\right)+{s}_{j}^{2}+{crt}_{\left({p}_{1},…,{p}_{k},{p}_{E}\right)}\left(0,…,0,{re}_{j}\right) mod q,{α}_{1}^{j},…,{α}_{n}^{j}\right) = \left({c}_{0}^{j},{c}_{1}^{j},…,{c}_{n}^{j}\right)$ And from this equation we can infer that ${s}_{j}^{2} = \left({c}_{0}^{j}+{\sum }_{t = 1}^{n} {c}_{t}^{j} {s}_{t}\right) - {crt}_{\left({p}_{1},…{p}_{k},{p}_{E}\right)} \left(0,…,0,{re}_{j}\right)$

If one then replaces the values of *sⱼsⱼ* and ${s}_{j}^{2}$ from the equation $\begin{matrix}{c}_{0} {c}_{0}^{′} + {\sum }_{i , j = 1 , i \neq j}^{n} \left({c}_{i}{c}_{j}^{′}+{c}_{j}{c}_{i}^{′}\right) {s}_{i} {s}_{j} + {\sum }_{j = 1}^{n} {c}_{j} {c}_{j}^{′} {s}_{j}^{2} \\ = > {c}_{0} {c}_{0}^{′} + {\sum }_{i , j = 1 , i \neq j}^{n} \left({c}_{i}{c}_{j}^{′}+{c}_{j}{c}_{i}^{′}\right) \left({c}_{0}^{ij}+{\sum }_{t = 1}^{n} {c}_{t}^{ij} {s}_{t}\right) + {\sum }_{j = 1}^{n} {c}_{j} {c}_{j}^{′} \left({c}_{0}^{j}+{\sum }_{t = 1}^{n} {c}_{t}^{j} {s}_{t}\right) \\ = > {c}_{0} {c}_{0}^{′} + {\sum }_{i , j = 1 , i \neq j}^{n} {c}_{0}^{ij} \left({c}_{i}{c}_{j}^{′}+{c}_{j}{c}_{i}^{′}\right) + {\sum }_{i , j = 1 , i \neq j}^{n} \left({c}_{i}{c}_{j}^{′}+{c}_{j}{c}_{i}^{′}\right) {\sum }_{t = 1}^{n} {c}_{t}^{ij} {s}_{t} + + {\sum }_{j = 1}^{n} {c}_{j} {c}_{j}^{′} {\sum }_{t = 1}^{n} {c}_{t}^{j} {s}_{t} \\ = > \left({c}_{0}{c}_{0}^{′}+{\sum }_{i , j = 1 , i \neq j}^{n} {c}_{0}^{ij} \left({c}_{i}{c}_{j}^{′}+{c}_{j}{c}_{i}^{′}\right) + {\sum }_{j = 1}^{n} {c}_{j} {c}_{j}^{′} {c}_{0}^{j}\right) + {\sum }_{t = 1}^{n} \left({c}_{t}^{j}+{\sum }_{i , j = 1 , i \neq j}^{n} \left({c}_{i}{c}_{j}^{′}+{c}_{j}{c}_{i}^{′}\right) {c}_{t}^{ij}\right) {s}_{t} \\ = {c}_{0}^{∗} + {\sum }_{t = 1}^{n} {c}_{t}^{∗} {s}_{t}\end{matrix}$ Where ${c}_{0}^{∗} = \left({c}_{0}{c}_{0}^{′}+{\sum }_{i , j = 1 , i \neq j}^{n} {c}_{0}^{ij} \left({c}_{i}{c}_{j}^{′}+{c}_{j}{c}_{i}^{′}\right) + {\sum }_{j = 1}^{n} {c}_{j} {c}_{j}^{′} {c}_{0}^{j}\right)$ ${c}_{t}^{∗} = \left({c}_{t}^{j}+{\sum }_{i , j = 1 , i \neq j}^{n} \left({c}_{i}{c}_{j}^{′}+{c}_{j}{c}_{i}^{′}\right) {c}_{t}^{ij}\right) , t = 1 , … , n$ ${l}_{t}^{∗} = {l}_{t} + {l}_{t}^{′} , t = 1 , … , k$

Re-equating the lefthand side of the equation to the righthand side of the equation: $\begin{matrix}{c}_{0}^{∗} + {\sum }_{t = 1}^{n} {c}_{t}^{∗} {s}_{t} = {xcrt}_{\left({p}_{1},…{p}_{k},{p}_{k + 1}\right) , q} \left({m}_{1}{m}_{1}^{′}{r}_{1}^{{l}_{1} + {l}_{1}^{′}},…,{m}_{k}{m}_{k}^{′}{r}_{k}^{{l}_{k} + {l}_{k}^{′}},ee′{r}_{k + 1}^{2}\right) \\ ⇒ {c}_{multiply} = \left[\left({c}_{0}^{∗},{c}_{1}^{∗},…,{c}_{n}^{∗}\right), \left({l}_{1}+{l}_{1}^{′},…,{l}_{k}+{l}_{k}^{′}\right)\right] = Enc \left({m}_{1}∗{m}_{1}^{′},…,{m}_{k}∗{m}_{k}^{′}\right)\end{matrix}$

### Homomorphic addition

The system preferably comprises a homomorphic addition function to obtain a ciphertext *c_{add}* that is encryption of the sum of two plaintexts (*m*₁, ... , *mₖ*) and $\left({m}_{1}^{′},…,{m}_{k}^{′}\right)$ - i.e. ${c}_{add} = enc \left({m}_{1}+{m}_{1}^{′}, …, {m}_{k}+{m}_{k}^{′}\right)$ .

If the two plaintexts have been encrypted using the encryption function above, then: $c = enc \left({m}_{1},…,{m}_{k}\right) = \left[\left({c}_{0},{c}_{1},…,{c}_{n}\right), \left({l}_{1},…,{l}_{k}\right)\right]$ and $c ′ = enc \left({m}_{1}^{′},…,{m}_{k}^{′}\right) = \left[\left({c}_{0}^{′},{c}_{1}^{′},…,{c}_{n}^{′}\right), \left({l}_{1}^{′},…,{l}_{k}^{′}\right)\right]$

Intermediary values *c*⁽¹⁾, *c*⁽²⁾ and ${l}_{i}^{∗}$ can be computed based on c and c' using the following equations: ${l}_{i}^{∗} = max \left\{{l}_{i}, {l}_{i}^{′}\right\} ,$ ${c}^{\left(1\right)} = \left({\sum }_{i = 1}^{k} {R}_{i}^{{l}_{i}^{∗} - {l}_{i}}\right) ∗ c , {c}^{\left(2\right)} = \left({\sum }_{i = 1}^{k} {R}_{i}^{{l}_{i}^{∗} - {l}_{i}^{′}}\right) ∗ c ′$

Where Σ represents coordinate-wise sum, * represents a homomorphic multiplication in accordance with the present disclosure as defined in above, and ${R}_{i}^{l}$ represents homomorphic multiplication of *R*ᵢ with itself *l* number of times. The final result is obtained by decomposing c to c₀, *c*₁, ... , *c*ₙ and c' to ${c}_{0}^{′} , {c}_{1}^{′} , … , {c}_{n}^{′}$ and performing a coordinate wise sum of the resultant *cᵢ*'s of *c*⁽¹⁾ and *c*⁽²⁾ to obtain: ${c}_{add} = \left[\left(\left({c}_{0}^{\left(1\right)}+{c}_{0}^{\left(2\right)}\right)mod q,…,\left({c}_{k}^{\left(1\right)}+{c}_{k}^{\left(2\right)}\right)mod q\right), \left({l}_{1}^{∗},…,{l}_{k}^{∗}\right)\right]$

Due to the properties of the encryption algorithm according to the present disclosure, $\left[\left(\left({c}_{0}^{\left(1\right)}+{c}_{0}^{\left(2\right)}\right) mod q,…,\left({c}_{k}^{\left(1\right)}+{c}_{k}^{\left(2\right)}\right) mod q\right), \left({l}_{1}^{∗},…,{l}_{k}^{∗}\right)\right] = enc \left({m}_{1}+{m}_{1}^{′}, …, {m}_{k}+{m}_{k}^{′}\right) .$

### Plaintext to Ciphertext Multiplication

A system according to the present disclosure preferably provides a second multiplication function, mf2(), for homomorphic plaintext to ciphertext multiplication. The second multiplication function is configured to generate a ciphertext *c*_{*multiply*2} that is an encryption of the product of plaintext (*m*₁, ... , *mₖ*) and a plaintext number *x.* I.e. mf2((*m*₁, ... , *mₖ*), x) = *c*_{*multiply*2} = *enc*(*x* * *m*₁, *... , x* * *mₖ*).

It has surprisingly been found that *c*_{*multiply*2} can be calculated as ${c}_{multiply 2} = \left[\left({c}_{0}^{∗},{c}_{1}^{∗},…,{c}_{n}^{∗}\right), \left({l}_{1}^{∗},…,{l}_{k}^{∗}\right)\right]$ , where t refers to the index value of ${c}_{t}^{∗}$ (for any integer value of t greater than or equal to 0 and less than or equal to n (i.e. 0 ≤ *t* ≤ *n*)). In particular, ${c}_{t}^{∗} = x ∗ {c}_{t} mod q , t = 0 , 1 , … , n$ For this function, the level ${c}_{t}^{∗}$ is the same as the level for *cₜ,* i.e. ${l}_{t}^{∗} = {l}_{t} , t = 0 , 1 , … , n$ As such the final ciphertext will be ${c}_{multiply 2} = \left[\left({c}_{0}^{∗},{c}_{1}^{∗},…,{c}_{n}^{∗}\right), \left({l}_{1}^{∗},…,{l}_{k}^{∗}\right)\right]$

### Generating a Public Key

The system also preferably configured to provide a function for generating one or more public keys from a secret key. Preferably, the secret key is provided as input, and is used to encrypt the following plaintext vectors:
a zero vector that is *e*₀ = (0,0, ...,0); and
k non-zero vectors that contain the value 1 in the n^{th} coordinate and 0 in the remaining coordinates, where 1 ≤ n ≤ k. E.g. *e*₁ = (1,0, ...,0), *e*₂ = (0,1,0, ...,0), ... , *eₖ* = (0,0, ...,0,1).
A public key is then generated by encrypting *e*₀, *e*₁, ..., *eₖ* in accordance with the present disclosure - i.e: $pk = \left({E}_{0}=enc\left({e}_{0}\right),{E}_{1}=enc\left({e}_{1}\right),…,{E}_{k}=enc\left({e}_{k}\right)\right)$

### Public Key Encryption

The system also is preferably configured to configured to provide a public key encryption function. The public key encryption function encrypts the plaintext vector (*m*₁, ... , *mₖ*) with the public key (instead of the secret key) to obtain a ciphertext that can only be decrypted using the corresponding secret key from which the public key was generated.

To encrypt the plaintext vector (*m*₁, ... , *mₖ*) with a public key *pk* generated as described above, the plaintext-ciphertext multiplication function described above is performed: on a random number r and the ciphertext *E*₀ of the public key pk; and on each coordinate *mᵢ* and ciphertext *Eᵢ* of the public key pk for *i* = 1, ..., *k*. The public key encrypted ciphertext c is then computed by performing a homomorphic addition of all the results of plaintext-ciphertext multiplications. I.e: $c = r ∗ {E}_{0} + {\sum }_{i = 1}^{k} {m}_{i} ∗ {E}_{i} ,$ where *r* * *E*₀ and *mᵢ* * *Eᵢ* represent plaintext-ciphertext multiplication, the values of r and *mᵢ* are plaintext values and the values of *Eᵢ* are ciphertexts. In the above equation, Σ represents the homomorphic addition of ciphertexts.

### Conclusion

The present disclosure provides a novel FHE scheme that does not require bootstrapping for performing arbitrary number of computations on encrypted data. As a result, the present disclosure significantly increases the speed to of performing calculations on encrypted data without compromising on security. This has the potential to extend the use of FHE into applications where FHE was previously not possible due to time & computational constraints. For example, it may be possible to use FHE in machine learning and artificial intelligence through performing analytics on encrypted data without facing any of the efficiency issues known in the prior art.

## Claims

1. A computer implemented method of generating keys for fully homomorphic encryption, the method comprising:
obtaining a first set of numbers S, wherein the first set of numbers is a set of pairwise coprime numbers *p*₁, ... , *p*_{*k+*1};
obtaining another parameter, wherein another parameter is a random or pseudo random number P; and
calculating a secret key, sk, based on the first set of numbers, **characterised by**:
the calculation of secret key being also based on the another parameter.

2. The method of claim 1, wherein k+1 = 2.

3. The method of claim 1 or 2, wherein the secret key, sk = {S, P}.

4. The method of claim 1, wherein:
obtaining another parameter P comprises obtaining a second set of prime numbers *r*₁, *r*₂, ... , *r*_{*k*+1}, and the method further comprising:
obtaining a third set of numbers as the another parameter, wherein the third set of numbers is a set of random or pseudo random numbers *s*₁, *... , sₙ*;
calculating the secret key, sk, based on the first set of numbers, the second set of numbers, and third set of numbers; and
calculating a public parameter, q, based on the first set of numbers and the second set of numbers.

5. The method of claim 4, wherein at least one of the first set of numbers, the second set of random prime numbers, and the third set of random numbers selected based on a security parameter.

6. The method of claim 4 or 5, wherein q is calculated by multiplying the first set of numbers together with the first and second extra prime numbers, whereby *q* = (*p*₁ × ... × *pₖ* × *p*_{*k*+1}) × (*r*₁ × *r*₂ × ... × *r*_{*k*+1}).

7. The method of any one of claims 4 to 6, wherein *sk =* {s *=* (*s*₁, *... , sₙ*), *p =* (*p*₁*,* ... *pₖ, p*_{*k+*1}), *r* = (*r*₁, *r*₂, ... *, r*_{*k*+1})}.

8. The method of any preceding claim, comprising generating re-linearization keys, rlks, wherein generating the rlks comprises encrypting components of the secret key.

9. The method of claim 5, comprising using a first set of random numbers ${α}_{1}^{ij} , … , {α}_{n}^{ij}$, *eᵢⱼ* to generate a first relinearization key *θ^{ij}* and using a set of random numbers ${α}_{1}^{j} , … , {α}_{n}^{j}$, *eⱼ* to generate a second relinearization key *δ^{j}*.

10. The method of any preceding claim comprising R-keys, wherein generating the R-Keys comprises encrypting components of the secret key.

11. The method of any one of claims 8 to 10, wherein encrypting components of the secret key comprises performing an extended Chinese remainder function, XCRT, on the components of the secret key.

12. A method of fully homomorphic encryption comprising obtaining a secret key, sk, and a plaintext *m*₁, ... , *mₖ* to be encrypted, wherein the secret key and the public parameter are generated in accordance with any preceding claim.

13. A computer program comprising instructions which, when executed by a computing system, cause the computing system to carry a method according to any preceding claim.

14. A computer-readable storage medium or a data carrier signal carrying the computer program of claim 13.

15. A computing system comprising at least one computer, the computer system comprising means for performing a method according to any one of claims 1 to 12.

## Patentansprüche

1. Computerimplementiertes Verfahren zum Erzeugen von Schlüsseln für vollständig homomorphe Verschlüsselung, wobei das Verfahren Folgendes umfasst:
Erlangen einer ersten Menge von Zahlen S, wobei die erste Menge von Zahlen eine Menge von paarweise teilerfremden Zahlen *p*₁, *..., p*_{*k*+1} ist;
Erlangen eines weiteren Parameters, wobei der weitere Parameter eine zufällige oder pseudozufällige Zahl P ist; und
Berechnen eines geheimen Schlüssels, sk, auf der Grundlage der ersten Menge von Zahlen, **gekennzeichnet durch** Folgendes:
die Berechnung des geheimen Schlüssels basierend auch auf dem weiteren Parameter.

2. Verfahren nach Anspruch 1, wobei k+1=2.

3. Verfahren nach Anspruch 1 oder 2, wobei der geheime Schlüssel, sk={S, P}.

4. Verfahren nach Anspruch 1, wobei:
das Erlangen eines weiteren Parameters P Erlangen einer zweiten Menge von Primzahlen *r*₁, *r*₂, *... , r*_{*k*+1} umfasst und das Verfahren ferner Folgendes umfasst:
Erlangen einer dritten Menge von Zahlen als den weiteren Parameter, wobei die dritte Menge von Zahlen eine Menge von zufälligen oder pseudozufälligen Zahlen *s*₁, ... , *sₙ* ist;
Berechnen des geheimen Schlüssels, sk, auf der Grundlage der ersten Menge von Zahlen, der zweiten Menge von Zahlen und der dritten Menge von Zahlen; und
Berechnen eines öffentlichen Parameters, q, auf der Grundlage der ersten Menge von Zahlen und der zweiten Menge von Zahlen.

5. Verfahren nach Anspruch 4, wobei mindestens eine von der ersten Menge von Zahlen, der zweiten Menge von zufälligen Primzahlen und der dritten Menge von zufälligen Zahlen auf der Grundlage eines Sicherheitsparameters ausgewählt.

6. Verfahren nach Anspruch 4 oder 5, wobei q durch Multiplizieren der ersten Menge von Zahlen zusammen mit den ersten und den zweiten zusätzlichen Primzahlen berechnet wird, wobei *q* = (*p*₁ × ... × *pₖ* × *p*_{*k*+1}) × (*r*₁ × *r*₂ × ... × *r*_{*k*+1}).

7. Verfahren nach einem der Ansprüche 4 bis 6, wobei *sk =* {*s*=*(s*₁, *..., sₙ*),*p =* (*p*₁*, ...pₖ, p*_{*k*+1})*, r =* (*r*₁, *r*₂, *..., r*_{*k+*1})}.

8. Verfahren nach einem vorhergehenden Anspruch, umfassend Erzeugen von Relinearisierungsschlüsseln, rlks, wobei das Erzeugen der rlks Verschlüsseln von Komponenten des geheimen Schlüssels umfasst.

9. Verfahren nach Anspruch 5, umfassend Verwenden einer ersten Menge von zufälligen Zahlen ${α}_{1}^{ij} , … , {α}_{n}^{ij}$, *eᵢⱼ* , um einen ersten Relinearisierungsschlüssel *θ^{ij}* zu erzeugen, und Verwenden einer Menge von zufälligen Zahlen ${α}_{1}^{j} , … , {α}_{n}^{j}$, *eⱼ*, um einen zweiten Relinearisierungsschlüssel *δ^{j}* zu erzeugen.

10. Verfahren nach einem vorhergehenden Anspruch, umfassend R-Schlüssel, wobei ein Erzeugen der R-Schlüssel Verschlüsseln von Komponenten des geheimen Schlüssels umfasst.

11. Verfahren nach einem der Ansprüche 8 bis 10, wobei das Verschlüsseln von Komponenten des geheimen Schlüssels Durchführen einer erweiterten Chinesischen Restfunktion, XCRT, an den Komponenten des geheimen Schlüssels umfasst.

12. Verfahren für vollständig homomorphe Verschlüsselung, umfassend Erlangen eines geheimen Schlüssels, sk, und eines Klartexts *m*₁, *..., mₖ,* der zu verschlüsseln ist, wobei der geheime Schlüssel und der öffentliche Parameter in Übereinstimmung mit einem vorhergehenden Anspruch erzeugt werden.

13. Computerprogramm, umfassend Anweisungen, die, wenn sie durch ein Rechensystem ausgeführt werden, das Rechensystem veranlassen, ein Verfahren gemäß einem vorhergehenden Anspruch zu tragen.

14. Computerlesbares Speichermedium oder Datenträgersignal, das das Computerprogramm nach Anspruch 13 trägt.

15. Rechensystem, umfassend mindestens einen Computer, wobei das Computersystem Mittel zum Durchführen eines Verfahrens gemäß einem der Ansprüche 1 bis 12 umfasst.

## Revendications

1. Procédé, mis en œuvre par ordinateur, de génération de clés pour un chiffrement entièrement homomorphe, le procédé comprenant :
l'obtention d'un premier ensemble de nombres S, ledit premier ensemble de nombres étant un ensemble de nombres premiers entre eux par paires *p*₁, ..., *p*_{*k*+1} ;
l'obtention d'un autre paramètre, ledit autre paramètre étant un nombre aléatoire ou pseudo-aléatoire P ; et
le calcul d'une clé secrète, sk, basé sur le premier ensemble de nombres, **caractérisé par** : le calcul de la clé secrète étant également basé sur l'autre paramètre.

2. Procédé de la revendication 1, k+1=2.

3. Procédé de la revendication 1 ou 2, ladite clé secrète, sk={S, P}.

4. Procédé de la revendication 1,
ladite obtention d'un autre paramètre P comprenant l'obtention d'un deuxième ensemble de nombres premiers *r*₁, *r*₂, *..., r*_{*k+*1}*,* et ledit procédé comprenant en outre :
l'obtention d'un troisième ensemble de nombres en tant qu'autre paramètre, ledit troisième ensemble de nombres étant un ensemble de nombres aléatoires ou pseudo-aléatoires *s*₁, ..., *sₙ* ;
le calcul de la clé secrète, sk, basé sur le premier ensemble de nombres, le deuxième ensemble de nombres et le troisième ensemble de nombres ; et
le calcul d'un paramètre public, q, basé sur le premier ensemble de nombres et le deuxième ensemble de nombres.

5. Procédé de la revendication 4, au moins l'un du premier ensemble de nombres, du deuxième ensemble de nombres premiers aléatoires et du troisième ensemble de nombres aléatoires étant sélectionné sur la base d'un paramètre de sécurité.

6. Procédé de la revendication 4 ou 5, q étant calculé en multipliant le premier ensemble de nombres avec les premier et second nombres premiers supplémentaires, moyennant quoi *q* = (*p*₁ × ... × *pₖ* × *p*_{*k+*1}) × (*r*₁ × *r*₂ × ... × *r*_{*k*+1}).

7. Procédé de l'une quelconque des revendications 4 à 6, *sk=* {*s*=(*s*₁, ..., *sₙ*),*p =* (*p*₁, ...*pₖ, p*_{*k*+1}), *r =* (*r₁, r*₂, *..., r*_{*k+*1})}.

8. Procédé d'une quelconque revendication précédente, comprenant la génération de clés de re-linéarisation, rlks, ladite génération des rlks comprenant le chiffrement de composants de la clé secrète.

9. Procédé de la revendication 5, comprenant l'utilisation d'un premier ensemble de nombres aléatoires ⱼ ${α}_{1}^{ij} , … , {α}_{n}^{ij}$, *eᵢⱼ* pour générer une première clé de relinéarisation *θ^{ij}* et l'utilisation d'un ensemble de nombres aléatoires ${α}_{1}^{j} , … , {α}_{n}^{j}$, *eⱼ* pour générer une seconde clé de relinéarisation *δ^{j}*.

10. Procédé d'une quelconque revendication précédente comprenant des clés R, ladite génération des clés R comprenant le chiffrement de composants de la clé secrète.

11. Procédé de l'une quelconque des revendications 8 à 10, ledit chiffrement de composants de la clé secrète comprenant la réalisation d'une fonction des restes chinois généralisée, XCRT, sur les composants de la clé secrète.

12. Procédé de chiffrement entièrement homomorphe comprenant l'obtention d'une clé secrète, sk, et d'un texte en clair *m*₁, ..., *mₖ* à chiffrer, ladite clé secrète et ledit paramètre public étant générés conformément à une quelconque revendication précédente.

13. Programme informatique comprenant des instructions qui, lorsqu'elles sont exécutées par un système informatique, amènent le système informatique à porter un procédé selon une quelconque revendication précédente.

14. Support de stockage lisible par ordinateur ou signal porteur de données transportant le programme informatique de la revendication 13.

15. Système informatique comprenant au moins un ordinateur, le système informatique comprenant un moyen pour réaliser un procédé selon l'une quelconque des revendications 1 à 12.
